# EUROPÄISCHE PATENTSCHRIFT

(11) **EP 3 585 667 B1**
(45) Veröffentlichungstag und Bekanntmachung des Hinweises auf die Patenterteilung: **05.04.2023**
(21) Anmeldenummer: 18705335.0
(22) Anmeldetag: 01.02.2018
(51) Int. Cl.: B60W 30/04, B60W 50/00, B60T 8/24

(54) **VERFAHREN ZUM STEUERN EINES FAHRZEUGES WÄHREND EINER KURVENFAHRT SOWIE ROLLSTABILITÄTS-REGELSYSTEM**
METHOD FOR CONTROLLING A VEHICLE ON A BEND AND ROLL STABILITY CONTROL SYSTEM
PROCÉDÉ POUR LA COMMANDE D'UN VÉHICULE DURANT UN VIRAGE AINSI QUE SYSTÈME DE RÉGULATION DE LA STABILITÉ EN ROULIS

(30) Priorität: 22.02.2017 DE 102017001709
(43) Veröffentlichungstag der Anmeldung: 01.01.2020
(73) Patentinhaber: ZF CV Systems Europe BV, 1170 Brussels (BE)
(72) Erfinder: HEISE, Michael, 30449 Hannover (DE); MUNKO, Tobias, 30459 Hannover (DE); PLÄHN, Klaus, 30926 Seelze (DE)
(74) Vertreter: Rabe, Dirk-Heinrich
(86) Internationale Anmeldenummer: PCT/EP2018/052549
(87) Internationale Veröffentlichungsnummer: WO 2018/153636

(56) Entgegenhaltungen:
- DE-A1- 19 830 189
- DE-A1- 19 848 236
- DE-A1-102006 023 265
- DE-U1- 29 624 641
- US-A1- 2005 085 985
- US-A1- 2007 008 090

## Beschreibung

Die Erfindung betrifft ein Verfahren zum Steuern eines Fahrzeuges, insbesondere Nutzfahrzeuges, während einer Kurvenfahrt, sowie ein Rollstabilitäts-Regelsystem zur Durchführung des Verfahrens Rollstabilitäts-Regelsysteme in Fahrzeugen, insbesondere Nutzfahrzeugen, dienen dazu, ein Umkippen des Fahrzeuges zu verhindern, indem anhand von aktuell erfassten Fahrdynamik-Parametern abgeschätzt wird, ob eine aktuelle Querbeschleunigung des Fahrzeuges einen Querbeschleunigungs-Grenzwert überschreitet. Ist dies der Fall, ist ein Umkippen des Fahrzeuges sehr wahrscheinlich. Um diesem Umkippen entgegenzuwirken, kann das Rollstabilitäts-Regelsystem eine Verzögerungsanforderung ermitteln und an ein Bremssystem des Fahrzeuges ausgeben, das diese Verzögerungsanforderung umsetzt. Die Verzögerungsanforderung wird hierbei derartig festgelegt, dass das Fahrzeug auf eine Fahrzeuggeschwindigkeit abgebremst wird, bei der der aktuelle Querbeschleunigungswert wieder unter den Querbeschleunigungs-Grenzwert fällt.

Nachteilig bei bisherigen Rollstabilitäts-Regelsystemen ist, dass diese lediglich den aktuellen Kurvenverlauf bzw. die aktuelle Querbeschleunigung an der aktuellen Position des Fahrzeuges berücksichtigen können, da die Verzögerungsanforderung lediglich in Abhängigkeit davon eingestellt wird. Anhand dieser Fahrdynamik-Parameter ist allerdings keine Aussage über den zukünftigen Kurvenverlauf möglich bzw. kann dieser lediglich anhand der aktuellen Fahrsituation für einen kurzen vorausliegenden Kurvenbereich von einigen Metern extrapoliert werden.

Eine Weiterentwicklung ist in US 8,489,287 B2 beschrieben, wonach anhand von von einer Kamera erfassten Kurven-Informationen insbesondere der zukünftige Kurvenradius abgeschätzt wird. In Abhängigkeit davon sowie unter Berücksichtigung eines Querbeschleunigungs-Grenzwertes wird anschließend eine Fahrzeuggeschwindigkeit ermittelt, für die ein Umkippen des Fahrzeuges im zukünftigen Kurvenverlauf vermieden werden kann. Wird festgestellt, dass auch zukünftig ein Umkippen droht, wird die Fahrzeuggeschwindigkeit durch aktives Bremsen des Fahrzeuges verringert. Im weiteren Kurvenverlauf erfolgt eine Reduzierung der Bremswirkung anhand der aktuell vorliegenden Fahrdynamik-Parameter, d.h. die Bremsung wird ggf. reduziert bzw. zurückgenommen, wenn für die aktuelle Position in der Kurve festgestellt wird, dass ein Umkippen unwahrscheinlicher wird bzw. der aktuelle Querbeschleunigungswert niedriger ist als der Querbeschleunigungs-Grenzwert.

Auch US 9,116,784 B2 zeigt ein derartiges Rollstabilitäts-Regelsystem, bei dem anhand von Fahrdynamik-Informationen des eigenen Fahrzeuges sowie von vorausschauend durch eine Kamera ermittelten Kurven-Informationen eine zukünftige Umkippwahrscheinlichkeit ermittelt wird. Wird diese zukünftig zu hoch, wird bremsend eingegriffen. Eine Rücknahme der Bremsung erfolgt, wenn für die aktuelle Position in der Kurve festgestellt wird, dass ein Umkippen unwahrscheinlicher wird bzw. der aktuelle Querbeschleunigungswert niedriger ist als der Querbeschleunigungs-Grenzwert.

DE 10 2006 023 265 A1 offenbart Verfahren und Vorrichtung zur Vermeidung des Überrollens, bei denen aus einem erfassten Fahrzustand und einer geschätzten Fahrzeugmasse eine maximal zulässige Querbeschleunigung berechnet wird. Ein Spurverlauf eines vor dem Fahrzeug liegenden Straßenabschnitts wird erfasst, und mit dem momentanen Fahrzustand und dem erfassten Spurverlauf wird die Querbeschleunigung oder die Fahrgeschwindigkeit vorhergesagt.

DE 296 24 641 U1 offenbart ein Fahrdynamikregelungssystem, bei dem mittels einer Bremsanlage selbsttätig fahrstabilisierende Bremseingriffe vorgenommen werden, wobei bei Überschreitung eines Kippverhinderungs-Schwellwertes kurvenäußere Räder zwecks Kippverhinderung gebremst werden."

Im weiteren Kurvenverlauf kann allerdings auch der Fall auftreten, dass sich der Kurvenradius wieder vergrößert, d.h. die Kurve wird im Kurvenverlauf weiter bzw. ein gerader Straßenabschnitt folgt. In diesem Fall werden bekannte Rollstabilitäts-Regelsysteme aber dennoch eine Verzögerungsanforderung ausgeben, die auf den Fahrdynamik-Parametern für die aktuelle Position sowie einer Extrapolation der aktuellen Fahrsituation basiert. Da sich der Kurvenverlauf aber anders fortsetzt als extrapoliert, ist die Verzögerungsanforderung in dieser Höhe unter Umständen nicht mehr nötig. Dies hat den Nachteil, dass es bei dem Fahrer zu Irritationen kommen kann, da dieser aufgrund seiner Sicht auf den Kurvenverlauf tatsächlich keinen oder einen niedrigeren Bremseingriff erwartet. Eine ungestörte und sichere Fahrbarkeit des Fahrzeuges kann somit nicht gewährleistet werden.

Es ist daher Aufgabe der Erfindung, ein Verfahren zum Steuern eines Fahrzeuges während einer Kurvenfahrt anzugeben, mit dem ein sicherer und zuverlässiger Betrieb des Fahrzeuges gewährleistet werden kann. Weiterhin ist Aufgabe der Erfindung, ein Rollstabilitäts-Regelsystem zur Durchführung des Verfahrens anzugeben.

Diese Aufgabe wird durch ein Verfahren nach Anspruch 1 sowie ein Rollstabilitäts-Regelsystem nach Anspruch 7 und ein Fahrzeug nach Anspruch 8 gelöst. Bevorzugte Weiterbildungen sind in den Unteransprüchen angegeben.

Erfindungsgemäß ist demnach vorgesehen, eine Reduzierung einer von einem Rollstabilitäts-Regelsystem an einer aktuellen Position angeforderten aktuellen Verzögerungsanforderung vorzunehmen, wenn für den zukünftigen Kurvenverlauf prognostizierte Querbeschleunigungswerte zumindest bereichsweise einen Querbeschleunigungs-Grenzwert unterschreiten. Die Reduzierung findet hierbei derartig statt, dass von dem Rollstabilitäts-Regelsystem eine reduzierte Verzögerungsanforderung ausgegeben wird, für die bei deren Umsetzung die prognostizierten Querbeschleunigungswerte weiterhin geringer bleiben als der Querbeschleunigungs-Grenzwert, um bei der Reduzierung auch weiterhin ein Umkippen zu vermeiden.

Dadurch kann bereits der Vorteil erreicht werden, dass eine vom Rollstabilitäts-Regelsystem in einem Fahrzeug, insbesondere Nutzfahrzeug, vorgegebene bzw. aktuell angeforderte Verzögerungsanforderung bereits vorausschauend zurückgenommen bzw. reduziert werden kann, wenn festgestellt wird, dass zum Verhindern eines Umkippens des Fahrzeuges während einer Kurvenfahrt keine derartig hohe Verzögerungsanforderung mehr nötig ist. Dies ist insbesondere dann der Fall, wenn sich im weiteren Kurvenverlauf ein Kurvenradius vergrößert, d.h. die Kurve wird weiter oder geht in einen geraden Straßenabschnitt über. Dadurch wird auch die wirkende Querbeschleunigung niedriger, was zu einer geringeren Umkippwahrscheinlichkeit führt. Dies wird auch vom Fahrer so wahrgenommen, da dieser anhand seiner Sicht auf eine Fahrzeugumgebung erwartet, dass eine anhaltende Bremsung tatsächlich nicht mehr nötig ist aufgrund des vorausliegenden weiter werdenden Kurvenverlaufes.

Die prognostizierte Querbeschleunigung wird hierbei anhand von Kurven-Informationen ermittelt, die den weiteren Verlauf der Kurve in einer Fahrtrichtung ab der aktuellen Position des Fahrzeuges charakterisieren, wobei insbesondere berücksichtigt wird, wie sich der Kurvenradius im weiteren Kurvenverlauf entwickelt. Aus dem Kurvenradius an der entsprechenden Position können vorzugsweise unter Berücksichtigung einer Fahrzeuggeschwindigkeit die prognostizierten Querbeschleunigungswerte ermittelt werden, die angeben, welche Querbeschleunigung im weiteren Kurvenverlauf voraussichtlich auf das Fahrzeug wirken wird.

Hierbei wird vorzugsweise auch berücksichtigt, wie sich die Fahrzeuggeschwindigkeit im weiteren Kurvenverlauf entwickelt, d.h. ob beispielsweise bereits eine aktuelle Verzögerungsanforderung durch das Rollstabilitäts-Regelsystem und/oder eine Bremsanforderung durch den Fahrer oder ein anderes Fahrerassistenzsystem vorliegen, die die Fahrzeuggeschwindigkeit und somit auch die prognostizierte Querbeschleunigung im weiteren Kurvenverlauf beeinflussen. Dadurch wird die Ermittlung der prognostizierten Querbeschleunigung genauer.

Die Kurven-Informationen werden hierbei über eine Sensorik im Fahrzeug bereitgestellt, wobei die Sensorik eine Fahrzeugumgebung erfasst und in Abhängigkeit davon Sensor-Daten an das Rollstabilitäts-Regelsystem ausgibt. Das Rollstabilitäts-Regelsystem ermittelt aus den Sensor-Daten dann den Kurvenradius an den zukünftigen Positionen in der Kurve, aus dem wiederum die prognostizierte Querbeschleunigung ermittelt wird. Ferner wird hierfür zusätzlich eine Fahrzeuggeschwindigkeit berücksichtigt.

Dadurch kann in einfacher Weise der zukünftige Kurvenverlauf erfasst und vom Rollstabilitäts-Regelsystem verarbeitet werden, um eine Umkippwahrscheinlichkeit für den zukünftigen Kurvenverlauf abzuschätzen.

Vorzugsweise kann dabei auf bereits im Fahrzeug vorhandene Systeme z.B. eines Stabilitätskontrollsystems oder eines Notbremsassistenten zurückgegriffen werden, die eine derartige Sensorik aufweisen. Es kann beispielsweise eine Kamera, ein Radar-System oder ein LIDAR-System zum Einsatz kommen.

Alternativ oder ergänzend kann zur Ermittlung der Kurven-Informationen auch auf ein Kartensystem zurückgegriffen werden, in dem Karten mit Stra-ßenverläufen zur Verfügung stehen, anhand derer in Abhängigkeit der aktuellen Position des Fahrzeuges ermittelt werden kann, wie die Kurve ab der aktuellen Position weiterverläuft. Sind also die Sensor-Daten nicht verfügbar oder tritt eine Störung in der Sensorik auf, kann auf ein weiteres System ausgewichen werden, um auch dann noch die Umkippwahrscheinlichkeit mit hoher Genauigkeit abschätzen zu können. Über das Kartensystem kann hierbei vorteilhafterweise vorausschauender gehandelt werden als mit der o.g. Sensorik, da die Kurven-Informationen weit vor dem Eintritt in die Kurve bereitstehen und die Umkippwahrscheinlichkeit bereits vorausschauend ermittelt werden kann. Über die Sensorik im Fahrzeug kann dies aber beispielsweise auch mit einer Kamera gewährleistet werden, die einen weiten Blickwinkel aufweist. Durch diese Möglichkeit der weit vorausschauenden Ermittlung kann eine Reduzierung der Verzögerungsanforderung ergänzend zu einem Bremseingriff oder stattdessen durch eine Reduzierung des Motormoments erreicht werden.

Vorteilhafterweise kann auch eine Plausibilisierung der unterschiedlich gewonnenen Kurven-Informationen stattfinden, indem die aus den Sensor-Daten gewonnen Kurven-Informationen mit denen aus dem Kartensystem gewonnen Kurven-Informationen verglichen werden.

Die Abschätzung der Umkippwahrscheinlichkeit kann nach Ermittlung der prognostizierten Querbeschleunigungswerte durch das Rollstabilitäts-Regelsystem erfolgen, das eine an der aktuellen Position vorliegende bzw. für die aktuelle Position abgeschätzte aktuelle Querbeschleunigung sowie die prognostizierten Querbeschleunigungswerte an zukünftigen Positionen der Kurve mit dem Querbeschleunigungs-Grenzwert vergleicht und in Abhängigkeit davon entsprechende Verzögerungsanforderungen an ein Bremssystem des Fahrzeuges automatisiert vorgibt. Somit kann sowohl anhand der aktuellen als auch anhand der prognostizierten Fahrsituation mit einer Erhöhung oder einer Reduzierung des Bremseingriffes reagiert werden.

Die aktuelle Querbeschleunigung kann hierbei von einem Querbeschleunigungs-Sensor im Fahrzeug, vorzugsweise im Schwerpunkt, ermittelt bzw. abgeschätzt werden und/oder auch aus einem Lenkwinkel unter Berücksichtigung einer Fahrzeuggeschwindigkeit und/oder aus einer von einem Gierraten-Sensor gemessenen Gierrate unter Berücksichtigung der Fahrzeuggeschwindigkeit und/oder aus an den einzelnen Rädern des Fahrzeuges gemessenen Radgeschwindigkeiten. Weiterhin kann auch eine Signaldynamik, d.h. ein Gradient der entsprechend gemessenen Größen mit einbezogen werden, um die Entwicklung der aktuellen Querbeschleunigung einschätzen zu können. Dadurch kann in einfacher Weise auf eine aktuelle bzw. eine für die aktuelle Position abgeschätzte Querbeschleunigung zurückgegriffen werden.

Die Erfindung wird im Folgenden anhand der beiliegenden Zeichnung erläutert. Es zeigen:
- Fig. 1: eine schematische Ansicht eines Fahrzeuges während einer Kurvenfahrt; und
- Fig. 2: ein Flussdiagramm des erfindungsgemäßen Verfahrens.

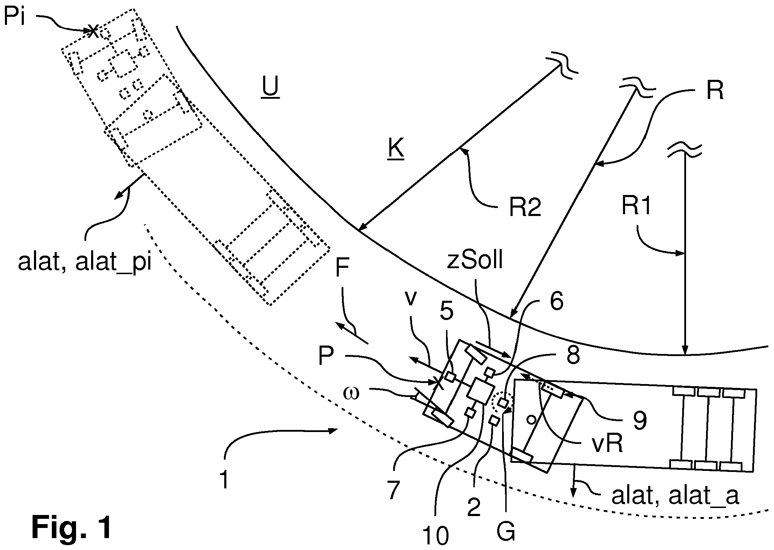

Figur 1 zeigt beispielhaft als ein Fahrzeug 1 ein Nutzfahrzeug-Gespann, das eine Kurve K mit einem Kurvenradius R durchfährt. Der gezeigte Ausschnitt der Kurve K weist im Bereich des Fahrzeuges 1 bis zu dessen aktueller Position P - beispielhaft die Vorderseite des Fahrzeuges 1 - einen ersten Wert R1 für den Kurvenradius R auf, sowie in etwa ab der aktuellen Position P des Fahrzeuges 1 bis zum Ende des Ausschnitts einen zweiten Wert R2 für den Kurvenradius R, der etwas größer ist als der erste Wert R1. Der Kurvenradius R der Kurve K nimmt also im weiteren Kurvenverlauf entlang einer Fahrtrichtung F des Fahrzeuges 1 zu bzw. die Kurve K wird weiter. Zum Stabilisieren des Fahrzeuges 1 während dieser Kurvenfahrt ist ein Rollstabilitäts-Regelsystem 10 im Fahrzeug 1 vorgesehen.

Das Rollstabilitäts-Regelsystem 10 ermittelt anhand von aktuellen Fahrdynamik-Parametern, insbesondere einem aktuell gemessenen oder einem berechneten bzw. abgeschätzten Querbeschleunigungswert alat_a für das Fahrzeug 1, sowie anhand von für den zukünftigen Verlauf der Kurve K prognostizierten Querbeschleunigungswerten alat_pi, wie hoch in der aktuellen Fahrsituation eine Wahrscheinlichkeit W für ein Umkippen des Fahrzeuges 1 ist und wie sich diese Umkippwahrscheinlichkeit W während des weiteren Kurvenverlaufes voraussichtlich entwickeln wird. Zur Bewertung der Umkippwahrscheinlichkeit W an der aktuellen Position P oder an zukünftigen Positionen Pi in der Kurve K wird der aktuelle Querbeschleunigungswert alat_a für die aktuelle Position P bzw. werden die prognostizierten Querbeschleunigungswerte alat_pi für die jeweiligen zukünftigen Positionen Pi mit einem Querbeschleunigungs-Grenzwert alat_th verglichen. D.h. für die aktuelle und die zukünftige Fahrsituation wird eine auf das Fahrzeug 1 wirkende Querbeschleunigung alat überwacht.

Bei Überschreiten des Querbeschleunigungs-Grenzwertes alat_th, d.h. bei Vorliegen einer hohen Umkippwahrscheinlichkeit W an der jeweiligen Position P, Pi, wird mit einer Anforderung zum Bremsen bzw. einer Vorgabe einer entsprechenden Verzögerungsanforderung zSoll, zSoll_r zum Anpassen einer Fahrzeuggeschwindigkeit v reagiert, die vom Bremssystem des Fahrzeuges 1 umgesetzt wird. Die Anpassung erfolgt hierbei dynamisch und derartig, dass während des Durchfahrens der Kurve K der Querbeschleunigungs-Grenzwert alat_th an keiner Position P, Pi überschritten wird, wobei für die aktuelle Position P anhand des an der aktuellen Position P abgeschätzten aktuellen Querbeschleunigungswertes alat_a sowie vorausschauend für die zukünftigen Positionen Pi anhand der prognostizierten Querbeschleunigungswerte alat_pi entsprechend reagiert und die Fahrdynamik des Fahrzeuges 1 somit auch vorausschauend im Hinblick auf eine Umkippverhinderung angepasst wird.

Die prognostizierten Querbeschleunigungswerte alat_pi werden aus erfassten Kurven-Informationen ermittelt, wobei die Kurven-Informationen insbesondere Informationen über den Verlauf der Kurve K in Fahrtrichtung F ab der aktuellen Position P des Fahrzeuges 1 angeben. Zum Erfassen dieser Kurven-Informationen werden vom Rollstabilitäts-Regelsystem 10 Sensor-Daten S einer Sensorik 5 im Fahrzeug 1 herangezogen. Die Sensorik 5 kann beispielsweise eine Kamera 5a und/oder ein Radarsystem 5b und/oder ein LIDAR-System 5c aufweisen, die eine Fahrzeugumgebung U um das eigene Fahrzeug 1 erfassen und entsprechende Sensor-Daten S ausgeben.

Eine derartige Sensorik 5 ist in Fahrzeugen 1 mit z.B. einem Notbremsassistenten (advanced emergency braking system, AEBS) oder anderen Stabilitätsregelsystemen bereits vorhanden und ist somit nicht mehr nachzurüsten. Das Übertragen der von der Sensorik 5 bereitgestellten Sensor-Daten S an das Rollstabilitäts-Regelsystem 10 kann beispielsweise über einen CAN-Bus oder dergleichen erfolgen. Das Rollstabilitäts-Regelsystem 10 ermittelt dann anhand dieser Sensor-Daten S, wie sich die Kurve K im weiteren Verlauf an den einzelnen Positionen Pi entwickelt, d.h. wie hoch beispielsweise der Kurvenradius R im weiteren Verlauf der Kurve K ist und ob dieser größer oder kleiner wird oder gleichbleibt.

Anhand der ermittelten Kurvenradi R an den zukünftigen Positionen Pi sowie der Fahrzeuggeschwindigkeit v werden dann die Querbeschleunigungswerte alat_pi für den weiteren Verlauf der Kurve K prognostiziert. Hierbei wird auch berücksichtigt, ob sich die aktuelle Fahrdynamik des Fahrzeuges 1 in der Kurve K verändern wird, d.h. wie hoch beispielsweise die Fahrzeuggeschwindigkeit v im weiteren Verlauf der Kurve K unter Berücksichtigung einer ggf. vom Rollstabilitäts-Regelsystem 10 an der aktuellen Position P angeforderten aktuellen Verzögerungsanforderung zSoll sein wird, wobei auch eine Bremsanforderung vom Fahrer oder aber von anderen Fahrassistenzsystemen im Fahrzeug 1 berücksichtigt werden kann.

Ergänzend oder alternativ kann zum Erfassen der Kurven-Informationen auch auf Daten eines Kartensystems 6 zurückgegriffen werden. Dazu wird mit einem Positionsermittlungssystem 7 im Fahrzeug 1, beispielsweise GPS, GLONASS oder dergleichen, zunächst die aktuelle Position P des Fahrzeuges 1 ermittelt und mit im Kartensystem 6 vorhandenen Karten abgeglichen, wie die Kurve K ab der aktuellen Position P weiterverläuft. Anhand dieser Informationen kann das Rollstabilitäts-Regelsystem 10 ebenfalls einen Verlauf des Kurvenradius R und in Abhängigkeit davon prognostizierte Querbeschleunigungswerte alat_pi wie oben beschrieben ermitteln.

Ergänzend können die Sensor-Daten der Sensorik 5 und die aus dem Kartensystem 6 gewonnenen Informationen auch plausibilisiert werden, beispielsweise bei gestörtem Empfang des Positionsermittlungssystems 7 oder bei Störungen beim Erfassen der Fahrzeugumgebung U durch die Sensorik 5.

Der aktuelle Querbeschleunigungswert alat_a kann beispielsweise direkt von einem Querbeschleunigungs-Sensor 2 im Fahrzeug 1 gemessen werden, der beispielsweise in einem Fahrzeug 1 mit Stabilitätskontrollsystem bereits vorhanden ist. Es ist aber auch möglich, den aktuellen Querbeschleunigungswert alat_a anhand eines aktuell gemessenen Lenkwinkels ω und der aktuell gemessenen Fahrzeuggeschwindigkeit v abzuschätzen, wobei aus dem aktuellen Lenkwinkel ω der aktuelle Kurvenradius R folgt und daraus die aktuelle Querbeschleunigung alat_a über alat_a = v²/R. Hierbei wird angenommen, dass sich bei dem aktuellen vorliegenden Lenkwinkel ω sowie mit der vorliegenden Fahrdynamik nach einer gewissen Zeit ein bestimmter aktueller Querbeschleunigungswert alat_a einstellen wird. Im Gegensatz zu einer Messung mit dem Querbeschleunigungs-Sensor 2 kann der sich auf eine Lenkanforderung etwas verzögernd einstellende aktuelle Querbeschleunigungswert alat_a also bereits vorausschauend abgeschätzt werden. Weiterhin kann der aktuelle Querbeschleunigungswert alat_a auch aus einer beispielsweise von einem Gierraten-Sensor 8 gemessenen Gierrrate G und der aktuell gemessenen Fahrzeuggeschwindigkeit v oder aus an Rädern 9 des Fahrzeuges 1 gemessenen Radgeschwindigkeiten vR ermittelt werden.

Durch ein zusätzliches Einbeziehen der Kurven-Informationen wird also vom Rollstabilitäts-Regelsystem 10 vorausschauend die Entwicklung der Querbeschleunigungswerte alat_a, alat_pi und somit auch die sich entwickelnde Umkippwahrscheinlichkeit W abgeschätzt und darüber festgestellt, ob eine Reduzierung der Fahrzeuggeschwindigkeit v gemäß der aktuellen Verzögerungsanforderung zSoll tatsächlich noch sinnvoll ist oder nicht, d.h. ob eine gegebenenfalls vom Rollstabilitäts-Regelsystem 10 vorgegebene aktuelle Verzögerungsanforderung zSoll beibehalten werden sollte oder nicht.

Demnach kann beispielsweise in der Fahrsituation gemäß Fig. 1 an der aktuellen Position P des Fahrzeuges 1 anhand der über die Sensorik 5 und/oder über das Kartensystem 6 ermittelten Kurven-Informationen erkannt werden, dass die Kurve K im weiteren Verlauf weiter wird. Die anhand der aktuellen Fahrdynamik-Informationen bzw. des aktuellen Querbeschleunigungswertes alat_a ermittelte Wahrscheinlichkeit W für ein Umkippen bei einem Abbremsen mit der an der aktuellen Position P angeforderten aktuellen Verzögerungsanforderung zSoll ist somit für den in Fahrtrichtung F folgenden Verlauf der Kurve K nicht mehr relevant, da anzunehmen ist, dass der aktuelle Querbeschleunigungswert alat_a durch Reduzierung des Lenkwinkels ω selbst bei gleichbleibender Fahrzeuggeschwindigkeit v zukünftig geringer wird. Folglich kann auch die an der aktuellen Position P vom Rollstabilitäts-Regelsystem 10 vorgegebene aktuelle Verzögerungsanforderung zSoll durch Vorgabe einer demgegenüber reduzierten Verzögerungsanforderung zSoll_r verringert oder ggf. auch ganz zurückgenommen werden, falls dies in der Folge nicht zu einer Überschreitung des Querbeschleunigungs-Grenzwertes alat_th führt.

Die Rücknahme bzw. Reduzierung der aktuellen Verzögerungsanforderung zSoll erfolgt somit nicht anhand der Fahrdynamik-Informationen für die aktuelle Position, sondern anhand der vorausschauend ermittelten Kurven-Informationen. Die Reduzierung oder Rücknahme der aktuellen Verzögerungsanforderung zSoll kann also bereits zu einem früheren Zeitpunkt und damit auch sanfter erfolgen, da nicht erst dann abrupt reagiert wird, wenn die Änderung des Kurvenradius R über einen sich ändernden Lenkwinkel ω oder eine entsprechende Entwicklung des aktuellen Querbeschleunigungswertes alat_a festgestellt werden kann sondern bereits vorausschauend. Dadurch wird der Fahrer nicht durch unnötige Bremseingriffe irritiert, da die Reaktion des Fahrzeuges 1 zu der vom Fahrer beobachteten Fahrzeugumgebung U passt, d.h. eine Rücknahme bzw. Reduzierung der aktuellen Verzögerungsanforderung zSoll auf einen wieder weiter werdenden Kurvenverlauf.

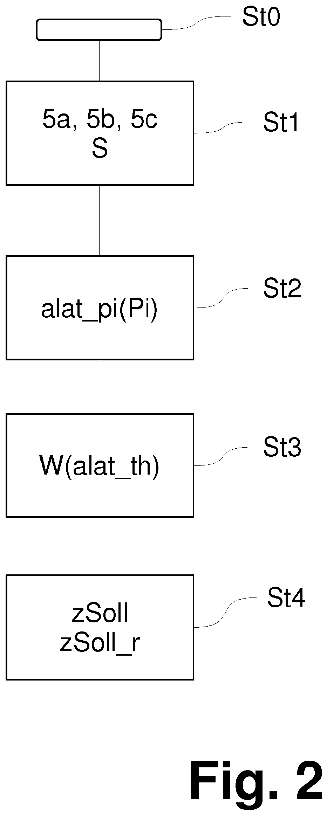

Das erfindungsgemäße Verfahren kann gemäß Fig. 2 beispielsweise folgendermaßen stattfinden.

In einem anfänglichen Schritt St0 wird das Rollstabilitäts-Regelsystem 10 initialisiert, beispielsweise bei Fahrtbeginn.

In einem ersten Schritt St1 wird anhand von über die Sensorik 5, z.B. der Kamera 5a und/oder dem Radarsystem 5b und/oder dem LIDAR-System 5c, ermittelten Kurven-Informationen der zukünftige Kurvenverlauf, insbesondere der Kurvenradius R an den zukünftigen Positionen Pi ermittelt. Die Sensorik 5 übermittelt dazu die Sensor-Daten S an das Rollstabilitäts-Regelsystem 10.

In einem zweiten Schritt St2 werden wie oben beschrieben aus den Kurven-Informationen prognostizierte Querbeschleunigungswerte alat_pi ermittelt, wobei die prognostizierten Querbeschleunigungswerte alat_pi jeweils eine an der entsprechenden zukünftigen Position Pi in der Kurve K voraussichtlich auf das Fahrzeug 1 wirkende Querbeschleunigung alat angeben.

Diese prognostizierten Querbeschleunigungswerte alat_pi werden in einem dritten Schritt St3 mit dem Querbeschleunigungs-Grenzwert alat_th verglichen, um eine Umkippwahrscheinlichkeit W an den zukünftigen Positionen Pi abzuschätzen. Wird dieser Querbeschleunigungs-Grenzwert alat_th für den zukünftigen Kurvenverlauf zumindest bereichsweise unterschritten, wird in einem vierten Schritt St4 eine vom Rollstabilitäts-Regelsystem 10 an der aktuellen Position P angeforderte aktuelle Verzögerungsanforderung zSoll auf eine reduzierte Verzögerungsanforderung zSoll_r reduziert, für die die den Querbeschleunigungs-Grenzwert alat_th bereits unterschreitenden prognostizierten Querbeschleunigungswerte alat_pi weiterhin geringer als der Querbeschleunigungs-Grenzwert alat_th bleiben. Ggf. kann dadurch die an der aktuellen Position P angeforderte aktuelle Verzögerungsanforderung zSoll auch vollständig zurückgenommen werden, beispielsweise bei einem Übergang in eine Geradeausfahrt.

### Bezugszeichenliste (Bestandteil der Beschreibung)

- 1: Fahrzeug
- 2: Querbeschleunigungs-Sensor
- 5: Sensorik
- 5a: Kamera
- 5b: Radarsystem
- 5c: LIDAR-System
- 6: Kartensystem
- 7: Positionsermittlungssystem
- 8: Gierratensensor
- 9: Räder des Fahrzeuges 1
- 10: Rollstabilitäts-Regelsystem
- alat_a: aktueller Querbeschleunigungswert an der Position P
- alat_pi: prognostizierte Querbeschleunigungswerte an den Positionen Pi
- alat_th: Querbeschleunigungs-Grenzwert
- F: Fahrtrichtung
- G: Gierrate
- K: Kurve
- P: aktuelle Position
- Pi: zukünftige Positionen
- R: Kurvenradius
- R1: erster Wert des Kurvenradius R
- R2: zweiter Wert des Kurvenradius R
- S: Sensor-Daten
- U: Fahrzeugumgebung
- v: Fahrzeuggeschwindigkeit
- vR: Radgeschwindigkeit
- W: Umkippwahrscheinlichkeit
- ω: Lenkwinkel
- zSoll: aktuelle Verzögerungsanforderung
- zSoll_r: reduzierte Verzögerungsanforderung

- St0, St1, St2, St3, St4: Schritte des Verfahrens

## Patentansprüche

1. Verfahren zum Steuern eines Fahrzeuges (1), insbesondere Nutzfahrzeuges (1), während einer Fahrt in einer Kurve (K), wobei das Nutzfahrzeug (1) ein Rollstabilitäts-Regelsystem (10) aufweist zum Ermitteln einer Umkippwahrscheinlichkeit (W) und Ausgabe einer Verzögerungsanforderung (zSoll, zSoll_r) in Abhängigkeit der ermittelten Umkippwahrscheinlichkeit (W), mit mindestens den folgenden Schritten:
- Ermitteln von Kurven-Informationen (R, R2), wobei die Kurven-Informationen den weiteren Verlauf der Kurve (K) in Fahrtrichtung (F) ab einer aktuellen Position (P) des Fahrzeuges (1) charakterisieren (St1) und von einer Sensorik (5) im Fahrzeug (1) ermittelt werden, wobei die Sensorik (5) eine Fahrzeugumgebung (U) um das Fahrzeug (1) erfasst und in Abhängigkeit davon Sensor-Daten (S) an das Rollstabilitäts-Regelsystem (10) ausgibt;
- Ermitteln, durch das Rollstabilitäts-Regelsystem (10), aus den Sensor-Daten (S) eines Kurvenradius (R, R2) an zukünftigen Positionen (Pi) der Kurve (K);
- Ermitteln von prognostizierten Querbeschleunigungswerten (alat_pi) in Abhängigkeit der Kurven-Informationen (R, R2), wobei die prognostizierten Querbeschleunigungswerte (alat_pi) jeweils eine an zukünftigen Positionen (Pi) im weiteren Verlauf der Kurve (K) voraussichtlich auf das Fahrzeug (1) wirkende Querbeschleunigung (alat) angeben (St2);
- Ermitteln der Umkippwahrscheinlichkeit (W) an den zukünftigen Positionen (Pi) in Abhängigkeit der prognostizierten Querbeschleunigungswerte (alat_pi), wobei dazu die prognostizierten Querbeschleunigungswerte (alat_pi) mit einem Querbeschleunigungs-Grenzwert (plat_th) verglichen werden (St3);
**dadurch gekennzeichnet, dass**
das Rollstabilitäts-Regelsystem (10) die prognostizierten Querbeschleunigungswerte (alat_pi) aus dem Kurvenradius (R, R2) an den zukünftigen Positionen (Pi) der Kurve (K) ermittelt, wobei dazu zusätzlich eine Fahrzeuggeschwindigkeit (v) berücksichtigt wird,
vom Rollstabilitäts-Regelsystem (10) eine reduzierte Verzögerungsanforderung (zSoll_r) ausgegeben wird, wenn die prognostizierten Querbeschleunigungswerte (alat_pi) zumindest bereichsweise den Querbeschleunigungs-Grenzwert (plat_th) unterschreiten,
wobei die reduzierte Verzögerungsanforderung (zSoll_r) geringer ist als eine vom Rollstabilitäts-Regelsystem (10) an der aktuellen Position (P) angeforderte aktuelle Verzögerungsanforderung (zSoll) und für die reduzierte Verzögerungsanforderung (zSoll_r) die prognostizierten Querbeschleunigungswerte (alat_pi) weiterhin geringer bleiben als der Querbeschleunigungs-Grenzwert (plat_th) (St4).

2. Verfahren nach Anspruch 1, **dadurch gekennzeichnet, dass** die vom Rollstabilitäts-Regelsystem (10) an der aktuellen Position (P) angeforderte aktuelle Verzögerungsanforderung (zSoll) in Abhängigkeit einer an der aktuellen Position (P) des Fahrzeuges (1) abgeschätzten Querbeschleunigung (alat_a) festgelegt wird und/oder in Abhängigkeit der prognostizierten Querbeschleunigung (alat_p) an den zukünftigen Positionen (Pi) in der Kurve (K).

3. Verfahren nach Anspruch 2, **dadurch gekennzeichnet, dass** die aktuelle Querbeschleunigung (alat_a) von einem Querbeschleunigungs-Sensor (2) ermittelt wird und/oder aus einem Lenkwinkel (w) unter Berücksichtigung einer Fahrzeuggeschwindigkeit (v) und/oder aus einer von einem Gierraten-Sensor (8) gemessenen Gierrate (G) unter Berücksichtigung der Fahrzeuggeschwindigkeit (v) und/oder aus an den einzelnen Rädern (9) des Fahrzeuges (1) gemessenen Radgeschwindigkeiten (vR).

4. Verfahren nach Anspruch 1, **dadurch gekennzeichnet, dass** zum Ermitteln der prognostizierten Querbeschleunigungswerte (alat_pi) zusätzlich die an der aktuellen Position (P) angeforderte aktuelle Verzögerungsanforderung (zSoll) herangezogen wird, wobei aus der aktuellen Verzögerungsanforderung (zSoll) eine Veränderung der Fahrzeuggeschwindigkeit (v) an den zukünftigen Positionen (Pi) der Kurve (K) ermittelt wird.

5. Verfahren nach einem der vorhergehenden Ansprüche, **dadurch gekennzeichnet, dass** die Kurven-Informationen (R, R2) aus einem Kartensystem (6) in Abhängigkeit der aktuellen Position (P) des Fahrzeuges (1) ermittelt werden, wobei im Kartensystem (6) der Verlauf der Kurve (K) hinterlegt ist.

6. Verfahren nach Anspruch 5, **dadurch gekennzeichnet, dass** die nicht durch das Kartensystem (6) gewonnenen Kurven-Informationen (R, R2) durch die aus dem Kartensystem (6) gewonnenen Kurven-Informationen (R, R2) plausibilisiert werden.

7. Rollstabilitäts-Regelsystem (10) eingerichtet zur Durchführung des Verfahrens nach einem der vorhergehenden Ansprüche.

8. Fahrzeug (1), insbesondere Nutzfahrzeug (1), mit einem Rollstabilitätsregelsystem (1) nach Anspruch 7 sowie einer Sensorik (5), insbesondere einer Kamera (5a) und/oder einem Radarsystem (5b) und/oder einem LIDAR-System (5c), eingerichtet zur Durchführung eines Verfahrens nach einem der Ansprüche 1 bis 6.

## Claims

1. Method for controlling a vehicle (1), in particular a utility vehicle (1), while traveling in a curve (K), the utility vehicle (1) having a rolling stability control system (10) for determining an overturn probability (W) and outputting a deceleration request (zSoll, zSoll_r) depending on the determined overturn probability (W), the method comprising at least the following steps:
- determining curve information (R, R2), the curve information characterizing (St1) the further course of the curve (K) in the direction of travel (F) from a current position (P) of the vehicle (1) and being determined by a sensor system (5) in the vehicle (1), the sensor system (5) detecting a vehicle surroundings (U) around the vehicle (1) and outputting sensor data (S) to the rolling stability control system (10) depending thereon;
- determining from the sensor data (S), by means of the rolling stability control system (10), a
curve radius (R, R2) at future positions (Pi) of the curve (K);
- determining predicted transverse acceleration values (alat_pi) depending on the curve information (R, R2), the predicted transverse acceleration values (alat_pi) each indicating (St2) a transverse acceleration (alat) expected to act on the vehicle (1) in the further course of the curve (K) at future positions (Pi);
- determining the overturn probability (W) at the future positions (pi) depending on the predicted transverse acceleration values (alat_pi), the predicted transverse acceleration values (alat_pi) being compared (St3) with a transverse acceleration limit value (plat_th);
**characterized in that**
the rolling stability control system (10) determines the predicted transverse acceleration values (alat_pi) from the curve radius (R, R2) at the future positions (Pi) of the curve (K), a vehicle speed (v) additionally being taken into account for this purpose,
a reduced deceleration request (zSoll_r) is output by the rolling stability control system (10) if the predicted transverse acceleration values (alat_pi) fall below the transverse acceleration limit value (plat_th) at least in regions,
the reduced deceleration request (zSoll_r) being lower than a
current deceleration request (zSoll) requested by the rolling stability control system (10) at the current position (P) and the predicted transverse acceleration values (alat_pi) remaining lower than the transverse acceleration threshold (plat_th) (St 4) for the reduced deceleration request (zSoll_r).

2. Method according to claim 1, **characterized in that** the current deceleration request (zSoll) requested by the rolling stability control system (10) at the current position (p) is determined depending on a transverse acceleration (alat_a) estimated at the current position (p) of the vehicle (1) and/or depending on the predicted transverse acceleration (alat_p) at the future positions (Pi) in the curve (K).

3. Method according to claim 2, **characterized in that** the current transverse acceleration (alat_a) is determined by a transverse acceleration sensor (2) and/or from a steering angle (w) taking into account a vehicle speed (v) and/or from a yaw rate (G) measured by a yaw rate sensor (8) taking into account the vehicle speed (v) and/or from wheel speeds (vR) measured at the individual wheels (9) of the vehicle (1).

4. Method according to claim 1, **characterized in that** in order to determine the predicted transverse acceleration values (alat_pi), the current deceleration request (zSoll) requested at the current position (P) is additionally used, a change in the vehicle speed (v) at the future positions (Pi) of the curve (K) being determined from the current deceleration request (zSoll).

5. Method according to any of the preceding claims, **characterized in that** the curve information (R, R2) is determined from a map system (6) depending on the current position (P) of the vehicle (1), the course of the curve (K) being stored in the map system (6).

6. Method according to claim 5, **characterized in that** the curve information (R, R2) not obtained by the map system (6) is checked for plausibility by the curve information (R, R2) obtained from the map system (6).

7. Rolling stability control system (10) designed to carry out the
method according to any of the preceding claims.

8. Vehicle (1), in particular a utility vehicle (1), comprising a rolling stability control system (1) according to claim 7 and a sensor system (5), in particular a camera (5a) and/or a radar system (5b) and/or a LIDAR system (5c), designed to carry out a method according to any of claims 1 to 6.

## Revendications

1. Procédé pour la commande d'un véhicule (1), en particulier d'un véhicule utilitaire (1), pendant un trajet dans un virage (K), le véhicule utilitaire (1) présentant un système de régulation de la stabilité en roulis (10) pour la détermination d'une probabilité de basculement (W) et la sortie d'une demande de décélération (zSoll, zSoll_r) en fonction de la probabilité de basculement (W) déterminée, comportant au moins les étapes suivantes :
- détermination d'informations de virage (R, R2), les informations de virage caractérisant (St1) le tracé ultérieur du virage (K) dans le sens de circulation (F) à partir d'une position actuelle (P) du véhicule (1) et étant déterminées par un système de capteurs (5) dans le véhicule (1), le système de capteurs (5) détectant un environnement de véhicule (U) autour du véhicule (1) et, en fonction de celui-ci, émettant des données de capteur (S) au système de régulation de la stabilité en roulis (10) ;
- détermination, par le système de régulation de la stabilité en roulis (10), d'un
rayon de virage (R, R2) à des positions futures (Pi) du virage (K) à partir des données de capteur (S) ;
- détermination de valeurs d'accélération transversale prévues (alat_pi) en fonction des informations de virage (R, R2), les valeurs d'accélération transversale prévues (alat_pi) indiquant (St2) respectivement une accélération transversale (alat) susceptible d'agir sur le véhicule (1) à des positions futures (Pi) dans le tracé ultérieur du virage (K) ;
- détermination de la probabilité de basculement (W) aux positions futures (Pi) en fonction des valeurs d'accélération transversale prévues (alat_pi), les valeurs d'accélération transversale prévues (alat_pi) étant à cet effet comparées (St3) à une valeur limite d'accélération transversale (plat_th) ;
**caractérisé en ce que**
le système de régulation de la stabilité en roulis (10) détermine les valeurs d'accélération transversale prévues (alat_pi) à partir du rayon de virage (R, R2) aux positions futures (Pi) du virage (K), une vitesse de véhicule (v) étant à cet effet en outre prise en compte,
une demande de décélération réduite (zSoll_r) est émise par le système de régulation de la stabilité en roulis (10) lorsque les valeurs d'accélération transversale prévues (alat_pi) sont inférieures au moins partiellement à la valeur limite d'accélération transversale (plat_th),
dans lequel la demande de décélération réduite (zSoll_r) est inférieure à une
demande de décélération actuelle (zSoll) demandée par le système de régulation de la stabilité en roulis (10) à la position actuelle (P) et les valeurs d'accélération transversale prévues (alat_pi) restent en outre inférieures à la valeur limite d'accélération transversale (plat_th) pour la demande de décélération réduite (zSoll_r) (St4).

2. Procédé selon la revendication 1, **caractérisé en ce que** la demande de décélération actuelle (zSoll) demandée par le système de régulation de la stabilité en roulis (10) à la position actuelle (P) est définie en fonction d'une accélération transversale (alat_a) estimée à la position actuelle (P) du véhicule (1) et/ou en fonction de l'accélération transversale prévue (alat_p) aux positions futures (Pi) dans le virage (K).

3. Procédé selon la revendication 2, **caractérisé en ce que** l'accélération transversale actuelle (alat_a) est déterminée par un capteur d'accélération transversale (2) et/ou à partir d'un angle de braquage (w) en tenant compte d'une vitesse de véhicule (v) et/ou à partir d'un taux de lacet (8) mesuré par un capteur de taux de lacet (G) en tenant compte de la vitesse de véhicule (v) et/ou à partir de vitesses de roue (vR) mesurées au niveau des différentes roues (9) du véhicule (1).

4. Procédé selon la revendication 1, **caractérisé en ce que**, pour la détermination des valeurs d'accélération transversale prévues (alat_pi), la demande de décélération actuelle (zSoll) demandée à la position actuelle (P) est en outre utilisée, une variation de la vitesse de véhicule (v) aux positions futures (Pi) du virage (K) étant déterminées à partir de la demande de décélération actuelle (zSoll).

5. Procédé selon l'une quelconque des revendications précédentes, **caractérisé en ce que** les informations de virage (R, R2) sont déterminées à partir d'un système de cartes (6) en fonction de la position actuelle (P) du véhicule (1), le tracé du virage (K) étant stocké dans le système de cartes (6).

6. Procédé selon la revendication 5, **caractérisé en ce que** les informations de virage (R, R2) non obtenues par le système de cartes (6) sont rendues plausibles par les informations de virage (R, R2) obtenues à partir du système de cartes (6).

7. Système de régulation de la stabilité en roulis (10) configuré pour la mise en oeuvre du
procédé selon l'une quelconque des revendications précédentes.

8. Véhicule (1), en particulier véhicule utilitaire (1), comportant un système de régulation de la stabilité en roulis (1) selon la revendication 7 ainsi qu'un système de capteurs (5), en particulier une caméra (5a) et/ou un système de radar (5b) et/ou un système LIDAR (5c), configuré pour la mise en oeuvre d'un procédé selon l'une quelconque des revendications 1 à 6.
